# EUROPEAN PATENT APPLICATION

(11) **EP 4 250 286 A1**
(43) Date of publication of application: **27.09.2023**
(21) Application number: 20966673.4
(22) Date of filing: 26.12.2020
(51) Int. Cl.: G10L 15/22, G06F 40/30

(54) **SPEECH COMPREHENSION METHOD AND DEVICE**

(71) Applicant: Huawei Technologies Co., Ltd., Shenzhen, Guangdong 518129 (CN)
(72) Inventor: SU, Qi, Shenzhen, Guangdong 518129 (CN); NIE, Weiran, Shenzhen, Guangdong 518129 (CN)
(74) Representative: Körber, Martin Hans
(86) International application number: PCT/CN2020/139712
(87) International publication number: WO 2022/134110

(57) **Abstract**

A speech understanding method (100) relates to the natural language understanding field, and is applicable in a speech understanding device (1200) provided at a cloud or a terminal, to understand speech information of a user and recognize a target application corresponding to an intent of the user in the speech information. The speech understanding method (100) includes: (110) obtaining speech information of a user, (120) recognizing an intent in the speech information and one or more slot values in the speech information respectively based on intent information and slot information that are stored in a comprehensive speech library and that come from a plurality of registered applications, (130) matching, based on the intent of the speech information, an application corresponding to the speech information, and (140) transferring the intent of the speech information and the one or more slot values in the speech information to the corresponding application. The speech understanding method (100) can support flexible expressions of the user, and is adaptable to all the registered applications. When the method adapts to a new application, there is no need to re-collect data, label data, and train a model. The method has advantages of a short adaptation period and low costs.

## Description

### TECHNICAL FIELD

The present invention relates to the field of natural language understanding technologies, and in particular, to a speech understanding method.

### BACKGROUND

A speech understanding system has been widely used in various scenarios, such as a smartphone, a smart home, and a smart cockpit. The speech understanding system may recognize an intent of a user by understanding speech input of the user, so that the user can control a related function through a speech instruction. One speech understanding system usually accesses a plurality of applications, so that the user can control a plurality of functions of the plurality of applications through one speech understanding system.

In a method in the conventional technologies, a semantic expression template is customized for a newly accessed application. The speech understanding system constructs a semantic understanding model dedicated to the semantic expression template, to implement adaptation between the speech understanding system and the application. In this solution, the semantic expression template has a weak generalization capability, and cannot support flexible expressions of the user. In another method, user instruction data corresponding to a newly accessed application needs to be collected in advance, and the semantic understanding model is retrained based on labeled data, to implement adaptation between the speech understanding system and the application. In this solution, during each time of adaptation of a newly accessed application, there is a need to re-collect data, label the data, and retrain a model. As a result, an adaptation period is long, and labor and material costs are high.

### SUMMARY

For a problem existing in the conventional technologies, embodiments of the present invention provide a speech understanding method, device and apparatus, a computer storage medium, and a computer program product. The speech understanding method can support various flexible expressions of a user, has a better speech understanding capability, and can adapt to all registered applications. In addition, during adaptation of a new application, there is no need to re-collect data, label the data, and train a model. The method has advantages of a short adaptation period and low costs.

In embodiments of the present invention, an "intent" means an operation performed on data or a resource, and may be named by using a verb-object phrase. For example, "book an air ticket", "check the weather", and "play music" are all expressions of intents. One "intent" may correspond to one or more "slots". For example, an intent: "book an air ticket" corresponds to slots such as "departure time", "departure place", "destination", and "cabin type". A "slot" is used to store an attribute of data or a resource, for example, "departure time", "departure place", "destination", and "cabin type" of an air ticket. A "slot value" means a specific attribute of the data or resource stored in the "slot". For example, the "destination" of the air ticket is "Beijing", and the "departure time" of the air ticket is "tomorrow".

A first aspect of an embodiment of the present invention provides a speech understanding method, including:
obtaining first speech information;
matching an intent for the first speech information based on intent information in a comprehensive semantic library;
determining a target application based on the intent of the first speech information;
recognizing one or more slot values in the first speech information based on slot information in the comprehensive semantic library, where
the intent information and the slot information in the comprehensive semantic library come from a plurality of registered applications; and
transferring the intent of the first speech information and the one or more slot values in the first speech information to the target application.

The registered application is an application that adapts to the speech understanding system. For example, the registered application may be an application that is installed in a terminal device and that adapts to the speech understanding system. When the registered application is registered in the speech understanding system, corresponding intent information and needed slot information for executing a service by the application are sent to the speech understanding system. The speech understanding system stores the received intent information and slot information in the comprehensive semantic library. The speech understanding system may directly store the received information in the comprehensive semantic library one by one. To be specific, the comprehensive semantic library may include a data packet corresponding to each registered application, and each data packet includes corresponding intent information and needed slot information for execution of the application. In addition, after receiving information sent by an application, the speech understanding system may also integrate the information, and combine same intent information and same slot information. In this case, the intent information and the slot information in the comprehensive semantic library are not stored by applications. Instead, there is a query table to indicate a correspondence between the application and each of the intent information and the slot information of the application.

In this embodiment of the present invention, a user usually expresses one or more intents through speech input. The intent indicates a target application to execute a service corresponding to the intent. In this embodiment of the present invention, any natural language expression that conforms to a habit of the user is supported. For example, when the user wants to express an intent: "book an air ticket", the user is supported to use a standard and formatted expression like "book an air ticket for me to Beijing", or the user is supported to use a simple expression with a small amount of information like "I want to go to Beijing", or the user is supported to use a keyword-based expression like "book an air ticket" or "book a ticket". Certainly, this embodiment of the present invention further includes an expression in another manner.

When accessing the speech understanding system, an application may send a registration request to the speech understanding system. The registration request includes an identifier and a data packet of the application. The data packet includes intent information and slot information that are needed in executing a service by the application. The intent information and the slot information in the data packet specifically mean description information of an intent and description information of a slot. The description information of the intent supports flexible descriptions of the application. For example, for the intent: "book an air ticket", the description information of the intent may be a formatted description like "book an air ticket to XX city on XX date", or may be a keyword-based description like "book an air ticket". The description information of the slot also supports flexible descriptions of the application. For example, for the slot: "destination", the description information of the slot may be a description like "a name of a city", or may be a keyword-based description like "place of arrival" or "destination".

Slot information needed in executing a specific service by an application includes a selection-type slot and a fill-in slot. The selection-type slot is a slot with a value belonging to a predefined limited set. The fill-in slot is a slot with a value being not predefined. A slot value of the fill-in slot may directly come from a fragment (extractive) in an instruction of the user, or may be generated (generative) by the speech understanding system based on an instruction of the user. For example, the selection-type slot may be "determine whether an air ticket is a direct air ticket", and a slot value corresponding to the selection-type slot may include two possible slot values: "yes" and "no". The fill-in slot may be "a destination of an air ticket". The fill-in slot is an extractive fill-in slot, and a slot value may be a place name like "Beijing" or "Shanghai" included in speech input of the user.

The intent information and the slot information in the data packet in the registration request may be stored in the comprehensive semantic library. Specifically, the comprehensive semantic library includes data packets of one or more applications. The applications may be in a one-to-one correspondence with the data packets. To be specific, a data packet corresponding to an application includes intent information and slot information that are needed in executing a service by the application. The comprehensive semantic library is in a continuously updating state. During each time of access of a new application, a data packet corresponding to the newly accessed application is stored in the comprehensive semantic library, and the comprehensive semantic library is updated once, so that the comprehensive semantic library always includes data packets of all registered applications.

After the first speech input is obtained, the speech input may be converted into text content through speech recognition, to facilitate subsequent processing. During understanding of the speech input of the user, the text content corresponding to the speech input of the user, and the intent information and the slot information in the comprehensive semantic library are all input into a semantic understanding model. The semantic understanding model recognizes an intent of the first speech input based on the intent information in the comprehensive semantic library, and recognizes one or more slot values in the first speech input based on the slot information in the comprehensive semantic library.

After the intent and the one or more slot values in a speech instruction of the user are recognized, the intent and the one or more slot values in the speech instruction of the user are transferred to a corresponding target application. Here, based on different deployment manners of the speech understanding system and the registered application, "transfer" may be implemented in a plurality of manners. When the speech understanding system shares a central processing unit (CPU, Central Processing Unit) with the service application, the intent and the one or more slot values may be transferred through program invoking. When functions of the speech understanding system and the service application are respectively executed by different processors, for example, when the speech understanding system is deployed on a cloud, or the speech understanding system is deployed on an independent apparatus, the intent and the one or more slot values may be transferred through network communication.

In this embodiment of the present invention, the semantic understanding model can recognize an intent and one or more slot values from speech input expressed in various manners. Therefore, the speech understanding method provided in this embodiment of the present invention can support various flexible expressions of the user, and has an advantage of a strong generalization capability. In addition, the comprehensive semantic library always includes the intent information and the slot information of all the registered applications. The semantic understanding model may determine, based on the intent information and the slot information of each registered application, whether the speech input of the user includes the corresponding intent and the one or more corresponding slot values. Therefore, the speech understanding method provided in this embodiment of the present invention can support speech control functions of all the registered applications, and can implement "plug-and-play" of a new application, thereby shortening an adaptation period between the speech understanding system and the new application and reducing adaptation costs of the new application.

With reference to the first aspect, in a first possible implementation of the first aspect, the speech understanding method further includes:
displaying a first interface of the target application based on the intent of the first speech information and the one or more slot values in the first speech information.

The first interface may be a home interface of the target application. In other words, after the target application corresponding to the first speech information is determined, the home interface of the target application is displayed for the user to perform a subsequent operation. The first interface may also display all options that correspond to the intent in the first speech information and that meet a condition of the first speech information, for the user to select. For example, when the first speech information expresses the intent: "book an air ticket", all air tickets that satisfy the one or more slot values in the first speech information may be displayed in the first interface, for the user to perform further selection.

The first interface of the target application is displayed based on the intent of the first speech information and the one or more slot values in the first speech information, and a result of the speech understanding can be presented to the user, so that the user can further perform an operation or determining. The user may also confirm correctness of the speech understanding through the first interface. Therefore, visualization and accuracy of the speech understanding are improved.

With reference to the first aspect or the first possible implementation of the first aspect, in a second possible implementation of the first aspect, after the intent of the first speech information and the one or more slot values in the first speech information are transferred to the target application, the speech understanding method further includes:
outputting a result of performing a target operation by the target application, where the target operation is an operation determined based on the intent of the first speech information and the one or more slot values in the first speech information.

The result of performing the target operation by the target application may be output in a plurality of manners. For example, the result of performing the target operation by the target application may be displayed on a screen. Alternatively, a sound prompt manner may be used, where one piece of sound feedback is specified to indicate that the execution succeeds, and another piece of sound feedback is specified to indicate that the execution fails. Alternatively, feedback may be provided in a speech broadcast manner, and the execution result is directly broadcast through a speech.

The speech understanding system obtains feedback of executing a corresponding service by the target application, and feeds back an execution result of the corresponding service to the user, so that the user can know whether the speech instruction of the user is correctly recognized and executed. When the execution fails, the execution may be tried again or performed in another manner. In this way, the following case can be avoided: The user mistakenly considers that the execution succeeds but the execution actually fails, thereby causing unnecessary troubles.

With reference to the first aspect or either of the foregoing two possible implementations of the first aspect, in a third possible implementation of the first aspect,
a plurality of candidate applications are determined based on the intent of the first speech information.

The target application is determined based on respective use frequencies or scores of the user for the plurality of candidate applications.

The candidate applications may be determined in a plurality of manners. For example, an application corresponding to the intent of the first speech information may be found by querying a table. In addition, alternatively, an application corresponding to the intent of the first speech information may be found by searching the data packets of the applications one by one. The score may be a score of the user for the target application, or may be a score of a network user for the target application. When the target application is determined based on the use frequency or the score of the user, only the use frequency of the user may be considered, or only the score of the user may be considered, or the use frequency and the score of the user may be both considered.

One speech understanding system may simultaneously access a plurality of applications that execute the same or a similar service function. In this case, a same intent may correspond to a plurality of target applications. For example, the intent: "book an air ticket" may correspond to a plurality of target applications such as Ctrip, Fliggy, and Meituan. In this case, the plurality of target applications may be sorted based on the use frequencies of the user or the scores of the user. In addition, the target application that ranks first is selected as a target application corresponding to a first speech instruction of the user. The intent and the one or more slot values in the speech input of the user are sent to the target application, and the target application executes a corresponding service. In this method, the target application is selected based on a habit of the user or a praise degree of the user. Therefore, an actual requirement of the user can be better met, and user experience can be greatly improved.

In addition, the target application may also be determined based on both the intent and the one or more slot values in the speech input of the user. Certainly, the target application may also be determined based on the intent and the one or more slot values in the speech input of the user with reference to information such as a use frequency and a score of the user.

With reference to the first aspect or any one of the foregoing three possible implementations of the first aspect, in a fourth possible implementation of the first aspect, the speech understanding method further includes:
receiving feedback information of the target application, where the feedback information includes slot information missing from the first speech information; and
requesting the user to input the slot information missing from the first speech information.

When an application executes a specific service, there is usually one or more mandatory slot values. If one or more mandatory slot values are missing, the target application cannot normally execute the specific service. Therefore, in this method embodiment, the feedback about the missing slot information from the target application is received, and the user is required to continue to input the missing slot value. The missing slot value is supplemented for a second time, thereby improving a success rate at which the target application executes the specific service and improving a success rate of executing a speech instruction of the user.

With reference to the first aspect or any one of the foregoing four possible implementations of the first aspect, in a fifth possible implementation of the first aspect,
one piece of intent information in the comprehensive semantic library corresponds to at least one slot package, and the slot package includes one or more pieces of slot information.

The recognizing one or more slot values in the first speech information based on slot information in the comprehensive semantic library is specifically:
recognizing the one or more slot values in the first speech input based on the slot information in a slot package corresponding to the intent of the first speech information.

When there is a correspondence between the intent information and the slot information in the comprehensive semantic library, that is, one intent corresponds to one or more slot packages, after the intent in the first speech information is determined, the one or more slot values in the first speech information can be recognized based on only the slot information in the slot package corresponding to the intent in the first speech information, thereby reducing a system workload and improving speech recognition efficiency.

With reference to the fifth possible implementation of the first aspect, in a sixth possible implementation of the first aspect,
one slot package includes one or more pieces of mandatory slot information, where the mandatory slot information is slot information required for executing an intent corresponding to the intent information.

When a quantity of slot values recognized from the first speech information is less than a quantity of pieces of mandatory slot information in a target slot package, the user is requested to input the slot information missing from the first speech information, where the target slot package is a slot package corresponding to the intent of the first speech information.

The mandatory slot information is slot information required for executing a specific service by an application. A service: "book an air ticket" is used as an example. Slots required for executing the service may include "departure time", "departure place", "destination", and the like. If any slot value of the mandatory slot is missing, the target application cannot normally execute the specific service. An optional slot value is additional slot information when an application executes a specific service. A service: "book an air ticket" is used as an example. An optional slot for executing the service may be "fare class of an air ticket", "seat preference", or the like. When a slot value in the optional slot is missing, the target application can still normally execute the specific service.

When one intent in a data packet provided by an application corresponds to one slot package, and the slot package includes one or more mandatory slots and one or more optional slots, the speech understanding system may determine, based on the recognized intent and one or more slot values in the first speech input of the user, whether the first speech input of the user includes all mandatory slot values corresponding to the intent of the user. When the first speech input of the user includes all mandatory slot values corresponding to the intent of the user, the intent and the one or more slot values in the first speech input of the user are directly transferred to the corresponding target application. When the first speech input of the user does not include all mandatory slot values corresponding to the intent of the user, as described in the first implementation and the second implementation of the first aspect of this embodiment of the present invention, subsequent operations such as requiring the user to input the missing slot value and transferring the newly obtained slot value in speech input of the user to the target application are performed. The speech understanding system directly recognizes the missing slot information, requires the user to supplement the missing slot information, and sends the complete intent and one or more slot values to the corresponding target application at a time, so that a quantity of interactions between the target application and the speech understanding system can be reduced, thereby shortening a time of the speech understanding, improving efficiency of the speech understanding, and greatly improving user experience.

With reference to the fourth possible implementation of the first aspect or the sixth possible implementation of the first aspect, in a seventh possible implementation of the first aspect, the speech understanding method further includes:
obtaining second speech information in response to the request;
recognizing one or more slot values in the second speech information based on the missing slot information; and
transferring the one or more slot values in the second speech information to the target application.

When an application executes a specific service, there is usually one or more mandatory slot values. If one or more mandatory slot values are missing, the target application cannot normally execute the specific service. Therefore, in this method embodiment, when a mandatory slot value is missing from the first speech input of the user, the user is required to continue to input the missing slot value. The second speech input of the user is obtained, and the one or more slot value in the second speech input of the user is transferred to the corresponding target application, to provide all slot values needed in executing the specific service by the target application. The missing slot value is supplemented for a second time, thereby improving a success rate at which the target application executes the specific service and improving a success rate of executing a speech instruction of the user. In addition, for the second speech input of the user, only a missing mandatory slot value may be expressed, and the first speech input of the user does not need to be repeated. In this way, repeated input of an instruction by the user is avoided, thereby greatly improving user experience.

A second aspect of an embodiment of the present invention provides a speech understanding device, including:
a communication module, configured to receive first speech information;
a data storage module, configured to store intent information and slot information, where the intent information and the slot information come from a plurality of registered applications; and
a processing module, configured to: match an intent for the first speech information based on the intent information in the data storage module, determine a target application based on the intent of the first speech information, and recognize one or more slot values in the first speech input based on the slot information in the data storage module.

The communication module is further configured to send the intent of the first speech information and the one or more slot values in the first speech information.

The speech understanding device provided in the second aspect of this embodiment of the present invention may be a virtual device, and may be deployed on a cloud. The speech understanding device may communicate with a plurality of terminal-side devices, and assist the plurality of terminal-side devices in completing a speech understanding task. The terminal-side device may receive speech information of a user, and intent information and slot information that are transferred by a registered application installed in the terminal-side device. The cloud-side speech understanding device collects intent information and slot information from the plurality of terminal-side devices, and stores the intent information and the slot information in the data storage module. When the terminal-side device needs to perform speech understanding, the terminal-side device sends the speech information to the cloud-side device. The processing module of the cloud-side speech understanding device performs a speech understanding operation, and sends an intent of the speech information and a slot in the speech information only back to the terminal-side device. The terminal-side device interacts with the target application to complete a subsequent operation.

With reference to the second aspect, in a first possible implementation of the second aspect, that the processing module determines a target application based on the intent of the first speech information is specifically that
the processing module determines a plurality of candidate applications based on the intent of the first speech information, and determines the target application based on respective use frequencies or scores of the user for the plurality of candidate applications.

With reference to the second aspect or the first possible implementation of the second aspect, in a second possible implementation of the second aspect,
one piece of intent information corresponds to at least one slot package, and the slot package includes at least one or more pieces of slot information.

The recognizing one or more slot values in the first speech input based on the slot information is specifically:
recognizing the one or more slot values in the first speech input based on the slot information in a slot package corresponding to the intent of the first speech information.

With reference to the second possible implementation of the second aspect, in a third possible implementation of the second aspect, that one piece of intent information corresponds to at least one slot package, and the slot package includes at least one or more pieces of slot information is specifically that
one slot package includes one or more pieces of mandatory slot information, where the mandatory slot information is slot information required for executing an intent corresponding to the intent information.

When a quantity of slot values recognized from the first speech information is less than a quantity of pieces of mandatory slot information in a target slot package, the communication module is further configured to send slot information missing from the first speech information, where the target slot package is a slot package corresponding to the intent of the first speech information.

When a slot value corresponding to the mandatory slot information is missing from the first speech information, a speech understanding device sends the missing slot information to the terminal-side device. The terminal-side device interacts with the user, to request the user to supplement the missing slot information.

With reference to the third possible implementation of the second aspect, in a fourth possible implementation of the second aspect, after the communication module sends the slot information missing from the first speech information to a second device, the communication module is further configured to obtain second speech information.

The processing module is further configured to recognize one or more slot values in the second speech information based on the missing slot information.

The communication module is further configured to send the one or more slot values in the second speech information.

Various possible implementations of the speech understanding device provided in the second aspect of this embodiment of the present invention are the same as those in the first aspect, and can achieve all the foregoing beneficial effects. To avoid repetition, details are not described herein again.

A third aspect of an embodiment of the present invention provides a speech understanding apparatus, including:
a microphone, configured to collect first speech information;
a memory, configured to store intent information and slot information, where the intent information and the slot information come from a plurality of registered applications; and
a processor, configured to: match an intent for the first speech information based on the intent information, determine a target application based on the intent of the first speech information, and recognize one or more slot values in the first speech information based on the slot information.

The processor is further configured to transfer the intent of the first speech information and the one or more slot values in the first speech information to the target application.

With reference to the third aspect, in a first possible implementation of the third aspect,
the speech understanding apparatus further includes a display.

The processor is configured to instruct, based on the intent of the first speech information and the one or more slot values in the first speech information, the display to display a first interface of the target application.

With reference to the third aspect or the first possible implementation of the third aspect, in a second possible implementation of the third aspect,
the speech understanding apparatus further includes an output apparatus, configured to: after the processor transfers the intent of the first speech information and the one or more slot values in the first speech information to the target application, output, based on an instruction of the processor, a result of performing a target operation by the target application, where the target operation is an operation determined based on the intent of the first speech information and the one or more slot values in the first speech information.

The output apparatus may be any apparatus that can output feedback to a user, like a loudspeaker or a display.

With reference to the third aspect or the foregoing two possible implementations of the third aspect, in a third possible implementation of the third aspect, that the processor determines a target application based on the intent of the first speech information is specifically that
the processor determines a plurality of candidate applications based on the intent of the first speech information; and
the processor determines the target application based on respective use frequencies or scores of the user for the plurality of candidate applications.

With reference to the third aspect, or the first possible implementation of the third aspect, or the third possible implementation of the third aspect, in a fourth possible implementation of the third aspect,
the processor is further configured to receive feedback information of the target application, where the feedback information includes slot information missing from the first speech information.

The speech understanding apparatus further includes an output apparatus, configured to output a first request. The first request is used to request the user to input the slot information missing from the first speech information.

With reference to the third aspect or the foregoing four possible implementations of the third aspect, in a fifth possible implementation of the third aspect,
one piece of intent information corresponds to at least one slot package, and the slot package includes one or more pieces of slot information.

The recognizing one or more slot values in the first speech information based on the slot information is specifically:
recognizing the one or more slot values in the first speech input based on the slot information in a slot package corresponding to the intent of the first speech information.

With reference to the fifth possible implementation of the third aspect, in a sixth possible implementation of the third aspect,
that one piece of intent information corresponds to at least one slot package, and the slot package includes one or more pieces of slot information is specifically that
one slot package includes one or more pieces of mandatory slot information, where the mandatory slot information is slot information required for executing an intent corresponding to the intent information.

The speech understanding apparatus further includes an output apparatus. When a quantity of slot values recognized from the first speech information is less than a quantity of pieces of mandatory slot information in a target slot package, the output apparatus is configured to request the user to input the slot information missing from the first speech information. The target slot package is a slot package corresponding to the intent of the first speech information.

With reference to the fourth possible implementation of the third aspect or the sixth possible implementation of the third aspect, in a seventh possible implementation of the third aspect,
after the requesting the user to input the slot information missing from the first speech information, the microphone is further configured to collect second speech information.

The processor is further configured to recognize one or more slot values in the second speech information based on the missing slot information.

The processor is further configured to transfer the one or more slot values in the second speech information to the target application.

Various possible implementations of the speech understanding apparatus provided in the third aspect of this embodiment of the present invention are the same as those in the first aspect, and can achieve all the foregoing beneficial effects. To avoid repetition, details are not described herein again.

A fourth aspect of an embodiment of the present invention provides a computer storage medium, including computer instructions. When the computer instructions are run on a computer, the computer is enabled to perform the first aspect or the foregoing seven possible implementations of the first aspect, to achieve all the foregoing beneficial effects.

A fifth aspect of an embodiment of the present invention provides a computer program product. When the computer program product is run on a computer, the computer is enabled to perform the first aspect or the foregoing seven possible implementations of the first aspect, to achieve all the foregoing beneficial effects.

### BRIEF DESCRIPTION OF DRAWINGS

To describe the technical solutions in embodiments of the present invention more clearly, the following briefly describes the accompanying drawings used in describing the conventional technologies and embodiments of the present invention.
FIG. 1 shows a speech understanding method according to an embodiment of the present invention;
FIG. 2 shows another speech understanding method according to an embodiment of the present invention;
FIG. 3 shows a form of a data packet according to an embodiment of the present invention;
FIG. 4 shows a form of another data packet according to an embodiment of the present invention;
FIG. 5 shows a form of still another data packet according to an embodiment of the present invention;
FIG. 6 shows semantic understanding performed by using a semantic understanding model according to an embodiment of the present invention;
FIG. 7 shows a training method for a semantic understanding model according to an embodiment of the present invention;
FIG. 8A and FIG. 8B show an example implementation of an example method according to an embodiment of the present invention;
FIG. 9A and FIG. 9B show another example implementation of an example method according to an embodiment of the present invention;
FIG. 10 shows a speech understanding system according to an embodiment of the present invention;
FIG. 11 shows a speech understanding apparatus according to an embodiment of the present invention; and
FIG. 12 shows a speech understanding device according to an embodiment of the present invention.

### DESCRIPTION OF EMBODIMENTS

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

The following describes embodiments of this application with reference to the accompanying drawings. A person of ordinary skill in the art may learn that, with development of technologies and emergence of new scenarios, the technical solutions provided in embodiments of this application are also applicable to a similar technical problem.

Embodiments of the present invention may be applied to various scenarios in which an application is controlled to perform a related function through speech input. For example, a user controls, through speech input, application software on a smart terminal device to perform a corresponding function, the user controls, through speech input, a household appliance indoors to perform a corresponding function, and the user controls, through speech input, a function of a hardware apparatus in a cockpit or a function of a multimedia system in a vehicle. In the foregoing various scenarios, one speech understanding system usually accesses a plurality of applications, so that the user can control a plurality of functions through one speech understanding system. However, interfaces of applications in different vertical domains are greatly different. Even for applications in the same vertical domain, interfaces designed by developers are also different. Therefore, it is a difficult task for a speech understanding system to adapt to various accessed applications and implement speech understanding. In addition, different users may have different expressions for the same instruction. The same user may also have different expressions for the same instruction in different application scenarios. Therefore, it is a difficult task for the speech understanding system to recognize a corresponding target application in various expressions of the user.

To resolve the foregoing problems, an embodiment of this application provides a speech understanding method. The method may be applied to a smart terminal, may be deployed in a cloud processor, or may be applied to an independent speech understanding device. In the speech understanding method, an accessed application first sends a registration request to the speech understanding system. The registration request includes a data packet. The data packet includes intent information and slot information that are needed in executing a service by the application. The speech understanding system stores, in a comprehensive semantic library, the data packet in the registration request of the application, and recognizes an intent and one or more slot values in speech input of the user based on the intent information and the slot information in the data packet provided by the application, so that the speech understanding system can flexibly adapt to various accessed applications. The method has advantages of a short adaptation period and low costs. In addition, a speech understanding model supports various flexible expressions of the user, and has a stronger speech understanding capability.

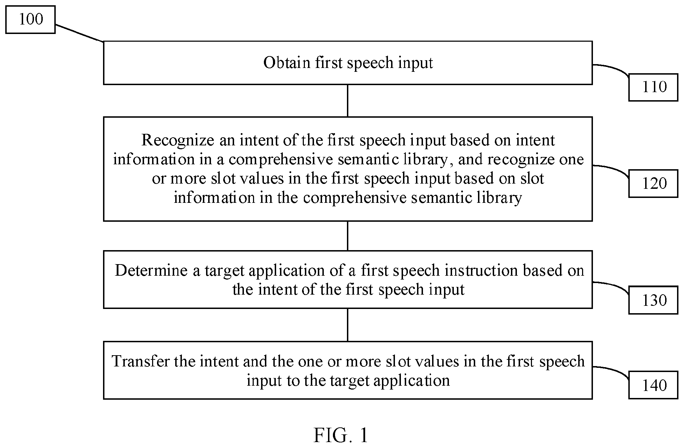

With reference to FIG. 1, in an embodiment of the present invention, a speech understanding method 100 is provided. The method includes the following steps.

Step 110: Obtain first speech input.

Speech input of a user usually expresses an intent. The intent indicates a target application to execute a service corresponding to the intent. In this embodiment of the present invention, any natural language expression that conforms to a habit of the user is supported. For example, when the user wants to express an intent: "book an air ticket", the user is supported to use a standard expression like "book an air ticket for me to Beijing", or the user is supported to use a simple expression like "I want to go to Beijing", or the user is supported to use a keyword-based expression like "book an air ticket" or "book a ticket". Certainly, this embodiment of the present invention further includes an expression in another manner.

In an implementation, step 110 further includes a speech recognition step, to convert the speech input of the user into a text for subsequent processing.

Step 120: Recognize an intent of the first speech input based on intent information in a comprehensive semantic library, and recognize one or more slot values in the first speech input based on slot information in the comprehensive semantic library.

The intent information and the slot information in the comprehensive speech library come from a data packet in a registration request of an application. To be specific, when the application adapts to the speech understanding system, the application needs to send the registration request to the speech understanding system. The registration request includes an identifier of the application and the data packet including the intent information and the slot information that are needed in executing a service by the application. A specific form of the data packet is described in detail below.

After receiving the registration request of the newly accessed application, the speech understanding system stores, in the comprehensive semantic library, the data packet in the registration request, for invocation during subsequent semantic recognition. In an implementation, the comprehensive semantic library may include data packets of one or more applications. The applications may be in a one-to-one correspondence with the data packets. To be specific, one application corresponds to one data packet including intent information and slot information that are needed in executing a service by the application. In another implementation, the comprehensive semantic library may sort and combine intent information and slot information in a received registration request of an application. For example, applications of the same type may have the same intent. The same intent may be combined and stored in the comprehensive semantic library. In this case, a concept of a data packet does not exist in the comprehensive speech library.

The comprehensive semantic library is in a continuously updating state. During each time of access of a new application, a data packet corresponding to the newly accessed application is stored in the comprehensive semantic library, and the comprehensive semantic library is updated once, so that the comprehensive semantic library always includes data packets of all accessed applications.

In an implementation, the step of recognizing the intent information in the first speech input based on intent information in the comprehensive semantic library and recognizing the one or more slot values in the first speech input of the user based on the slot information in the comprehensive semantic library may be performed by a semantic understanding model. A specific process of performing the semantic understanding by the semantic understanding model is described in detail below.

Step 130: Determine a target application of the first speech input based on the intent of the first speech input.

In an implementation, when only one application includes the intent recognized from the first speech input of the user, in this case, it may be directly determined that the application is the target application of the first speech input of the user. In another implementation, one speech understanding system may simultaneously access a plurality of applications that execute the same or a similar service function. In this case, a same intent may correspond to a plurality of target applications. For example, the intent: "book an air ticket" may correspond to a plurality of target applications such as Ctrip, Fliggy, and Meituan. In this case, in an implementation, the plurality of target applications may be sorted based on use frequencies of the user. In still another implementation, the plurality of target applications may be sorted based on scores of the user. In yet another implementation, the plurality of target applications may be further sorted by comprehensively considering the use frequencies of the user and the scores of the user. It should be understood that another possible manner of sorting the target applications is also possible. After the plurality of target applications are sorted, the target application that ranks first may be selected as a target application corresponding to a first speech instruction of the user. The intent and the one or more slot values in the speech input of the user are sent to the target application, and the target application executes a corresponding service. In addition, when the target application is determined, the one or more slot values included in the speech input of the user may be considered, and the target application is determined based on a comprehensive consideration of the intent and the one or more slot values in the speech input of the user.

In an implementation, if the intent information in the speech input of the user is not correctly recognized, feedback indicating a failure of the speech understanding is output. The feedback may be performed in any possible manner. For example, a warning indicating a failure of the speech understanding may be sent in a screen display manner or a speech broadcast manner, or the user may be required to perform speech input again in a screen display manner or a speech broadcast manner. It should be understood that another feedback manner in which the user can learn of a speech recognition failure is also possible.

Optionally, after the target application is determined, an interface of the target application may be displayed. In an implementation, a home interface of the target application may be displayed for the user to operate. In another implementation, an interface corresponding to the intent and the one or more slot values of the first speech information may be displayed. For example, when the intent of the user is "book an air ticket", all air tickets that satisfy the intent may be displayed for the user to select.

Step 140: Transfer the intent and the one or more slot values in the first speech input to the target application.

After the intent and the one or more slot values in a speech instruction of the user are recognized, the intent and the one or more slot values in the speech instruction of the user are transferred to the corresponding target application. There may be different transfer manners based on different deployment manners of the speech understanding system and an application. In an implementation, the speech understanding system and a service application may share one central processing unit (CPU, Central Processing Unit). For example, both the speech understanding system and a matching application are on one smart terminal (for example, the Siri speech assistant). In this case, the intent and the one or more slot values may be transferred through program invoking. In another implementation, the speech understanding system may be deployed on a cloud, and the application may be deployed on a terminal. In this case, the intent and the one or more slot values may be transferred through network communication. In still another implementation, functions of the speech understanding system and the service application may be respectively executed by different processors. For example, the speech understanding system may be an independent control apparatus, and is configured to control another peripheral apparatus (for example, the Xiaodu artificial intelligence assistant). In this case, the intent and the one or more slot values may be transferred through network communication. It should be understood that another deployment manner of the speech understanding system and the application is also possible. Correspondingly, still yet another implementation in which the intent and the one or more slot values in the speech instruction of the user can be transferred to the corresponding target application is also possible.

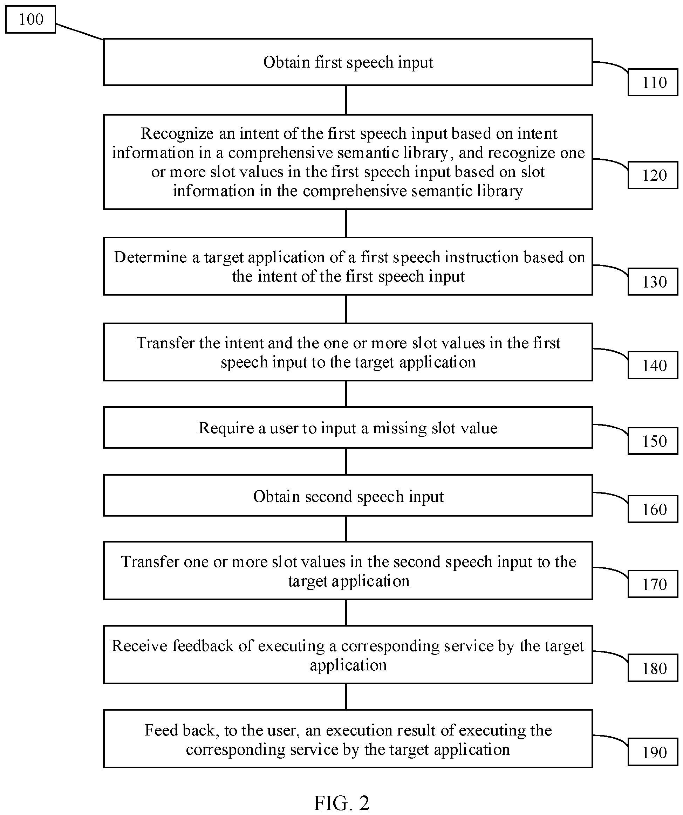

With reference to FIG. 2, in an embodiment of the present invention, the speech understanding method 100 further includes the following steps.

Step 150: Require the user to input a missing slot value.

When an application executes a specific service, there is usually one or more mandatory slot values. If a mandatory slot value is missing, the application cannot execute the specific service. Therefore, in an implementation, when a mandatory slot value is missing from the first speech input of the user, the user is required to continue to input the missing slot value. The speech understanding system may require the user to continue to input the missing slot value in any possible manner. In an implementation, the user may be required, through screen display, to input the missing slot value. For example, the following information may be displayed on a screen: Please input a slot value of XX slot. In another implementation, the user may be required, in a speech broadcast manner, to input the missing slot value. For example, an instruction that requires the user to input the missing slot value is converted into speech output through text to speech (TTS, Text to Speech) for broadcasting. It should be understood that other implementations in which the user can be required to input the missing slot value are all possible.

Step 160: Obtain second speech input.

In an implementation, the second speech input of the user may include only the missing slot value. For example, a keyword-based expression like "Beijing" or "Shanghai" is used to supplement a slot value about the slot "destination". In another implementation, the second speech input of the user may include the first speech input and the slot value missing from the first speech input. For example, if the first speech input only expresses "book an air ticket for tomorrow for me", the second speech input may be "book an air ticket to Beijing for tomorrow for me".

Step 170: Transfer the one or more slot values in the second speech input to the target application.

An implementation of transferring the one or more slot values in the second speech input to the target application in step 170 is the same as that in the step 140. To avoid repetition, details are not described herein again.

Step 180: Receive feedback of executing a corresponding service by the target application.

There may be different receiving manners based on different deployment manners of the speech understanding system and the application. In an implementation, the speech understanding system and the service application may share one central processing unit (CPU). For example, both the speech understanding system and the matching application are on one smart terminal (for example, the Siri speech assistant). In this case, the feedback of executing the corresponding service by the target application may be received in a program invoking manner. In another implementation, the speech understanding system may be deployed on a cloud, and the application may be deployed on a terminal. In this case, the feedback of executing the corresponding service by the target application may be received through network communication. In still another implementation, functions of the speech understanding system and the service application may be respectively executed by different processors. For example, the speech understanding system may be an independent control apparatus, and is configured to control another peripheral apparatus (for example, the Xiaodu artificial intelligence assistant). In this case, the feedback of executing the corresponding service by the target application may be received through network communication. It should be understood that another deployment manner of the speech understanding system and the application is also possible. Correspondingly, yet another implementation in which the feedback of executing the corresponding service by the target application can be received is also possible.

Step 190: Feed back, to the user, an execution result of executing the corresponding service by the target application.

The speech understanding system may feed back, to the user in any possible manner, the execution result of executing the corresponding service by the target application. In an implementation, the execution result of executing the corresponding service by the target application may be fed back to the user through screen display. For example, the following information may be displayed on a screen: An air ticket is successfully booked. In another implementation, the execution result of executing the corresponding service by the target application may be fed back to the user in a speech broadcast manner. For example, a text of "an air ticket is successfully booked" is converted into speech output through text to speech for broadcasting. It should be understood that other implementations in which the execution result of executing the corresponding service by the target application can be fed back to the user are all possible.

In the comprehensive semantic library, intent information and slot information of an application come from a data packet in a registration request of the application. The intent information and the slot information in the data packet provided by the application specifically mean description information of an intent and description information of a slot. The description information of the intent supports flexible descriptions of the application. In an implementation, a formatted description may be used. For example, description information of the intent: "book an air ticket" may be described as "book an air ticket to XX city on XX (date)". In another implementation, a keyword-based description may be alternatively used. For example, the description information of the intent: "book an air ticket" may be described as "book an air ticket". The description information of the slot also supports a flexible description of the application. In an implementation, a description similar to an attribute may be used. For example, description information of the slot "destination" may be described as "a name of a city". In still another implementation, a keyword-based description may be alternatively used. For example, the description information of the slot "destination" may be described as "place of arrival" or "destination". It should be understood that other possible description information about the intent and the slot is also possible.

Slot information needed in executing a specific service by an application includes a selection-type slot and a fill-in slot. The selection-type slot is a slot with a value belonging to a predefined limited set. The fill-in slot is a slot with a value being not predefined. A slot value of the fill-in slot may directly come from a fragment (extractive) in an instruction of the user, or may be generated (generative) by the speech understanding system based on an instruction of the user. For example, the selection-type slot may be "determine whether an air ticket is a direct air ticket", and a slot value corresponding to the selection-type slot may include two possible slot values: "yes" and "no". The fill-in slot may be "a destination of an air ticket". The fill-in slot is an extractive fill-in slot, and a slot value may be a place name like "Beijing" or "Shanghai" included in speech input of the user.

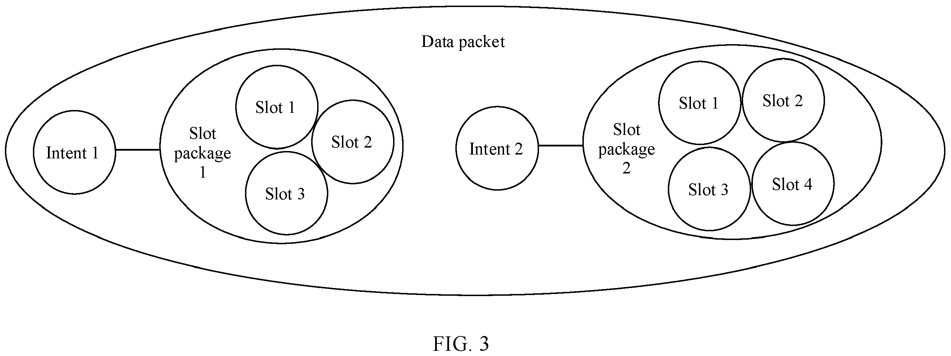

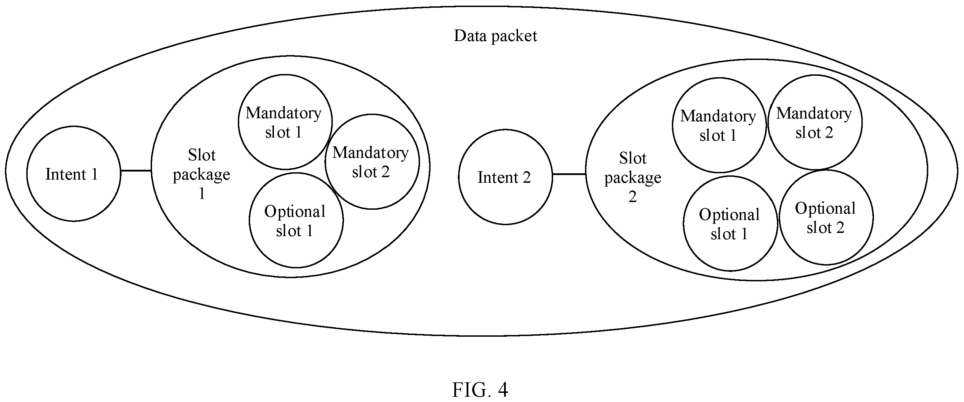

In an embodiment, the intent information and the slot information in the data packet provided by the application may be stored in different forms. As shown in FIG. 3, in an implementation, a correspondence between an intent and a slot may be specified in the data packet provided by the application. The correspondence between an intent and a slot may be as follows: One intent corresponds to one slot package, and the slot package includes one or more pieces of slot information needed in executing a service corresponding to the intent by the application. Further, as shown in FIG. 4, in an implementation, the slot package corresponding to one intent may include description information of one or more mandatory slots and description information of one or more optional slots.

The mandatory slot information is slot information required for executing a specific service by an application. A service: "book an air ticket" is used as an example. Slots required for executing the service may include "departure time", "departure place", "destination", and the like. If any slot value of the mandatory slot is missing, the target application cannot normally execute the specific service. An optional slot value is additional slot information when an application executes a specific service. A service: "book an air ticket" is used as an example. An optional slot for executing the service may be "fare class of an air ticket", "seat preference", or the like. When a slot value in the optional slot is missing, the target application can still normally execute the specific service.

When there is a correspondence between an intent and a slot in a data packet provided by an application, in other words, one intent corresponds to one slot package, the speech understanding system may first recognize the intent in the speech input of the user based on the intent information in the comprehensive semantic library. After recognizing the intent in the speech input of the user, the speech understanding system does not need to determine all slot information in the data packet, but needs to determine only slot information corresponding to the intent in the data packet, to recognize whether the speech instruction of the user includes the slot value corresponding to the slot information.

After recognizing the intent and the one or more slot values in the speech input of the user, the speech understanding system may determine whether the speech input of the user includes slot values corresponding to all mandatory slots needed in executing the corresponding service by the target application. In an implementation, when the speech input of the user includes the slot values corresponding to all the mandatory slots needed in executing the corresponding service by the target application, the intent and the one or more slot values in the speech input of the user may be directly transferred to the target application. In another implementation, when the speech input of the user does not include the slot values corresponding to all the mandatory slots needed in executing the corresponding service by the target application, step 150, step 160, and step 170 are performed.

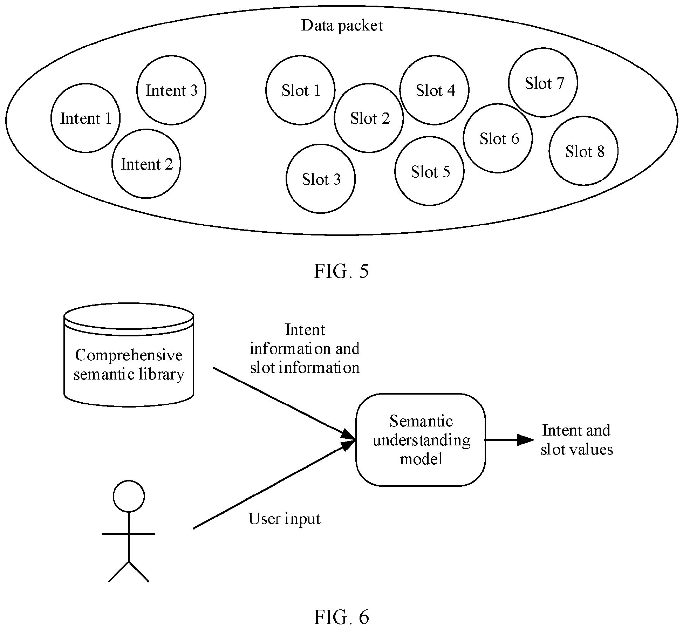

As shown in FIG. 5, in another implementation, there is no correspondence between an intent and a slot in a data packet provided by an application. The data packet provided by the application includes only one or more pieces of intent information and one or more pieces of slot information. A specific slot value needed in executing a service corresponding to a specific intent by the application cannot be determined based on the provided data packet.

When there is no correspondence between the intent and the slot in the data packet provided by the application, the intent in the first speech input of the user may be first recognized based on the intent information in the comprehensive semantic library. Because there is no correspondence between the intent and the slot in the data packet provided by the application, the one or more slot values in the first speech input of the user may be recognized based on all the slot information that is in the slot package of the target application and that is determined based on the intent.

When there is no correspondence between the intent and the slot in the data packet provided by the application, the speech understanding system cannot directly determine whether the speech input of the user includes each mandatory slot needed in executing the service corresponding to the intent by the target application. In an implementation, the speech understanding system may transfer the recognized intent and slot information in the speech input of the user to the target application. The target application determines whether the speech input of the user includes each mandatory slot needed in executing the service corresponding to the intent by the target application. If the speech input of the user includes each mandatory slot needed in executing the service corresponding to the intent by the target application, the corresponding service application is executed. If the speech input of the user does not include each mandatory slot needed in executing the service corresponding to the intent by the target application, the missing slot information is sent to the speech understanding system, and step 150, step 160, and step 170 are performed.

The operation of recognizing the intent of the first speech input based on the intent information in the comprehensive semantic library and the operation of recognizing the one or more slot values in the first speech input based on the slot information in the comprehensive semantic library are specifically performed by a semantic understanding model. To be specific, text content corresponding to the speech input of the user and the intent information and the slot information in the comprehensive semantic library are all input into the semantic understanding model, and the semantic understanding model recognizes the intent and the one or more slot values in the speech input of the user, as shown in FIG. 6. The semantic understanding model may be an existing machine reading comprehension (MRC, Machine Reading Comprehension) model like bidirectional encoder representations from transformers (BERT, Bidirectional Encoder Representations from Transformers), and another model by using which a semantic understanding function can be implemented is also possible.

In an implementation, the intent and the slot value may be recognized one by one. To be specific, only one piece of intent information and text information corresponding to the speech input of the user are input into the speech understanding system each time, and the speech understanding system determines whether the speech input of the user includes the corresponding intent. Recognizing whether the speech input of the user includes the intent: "book an air ticket" is used as an example. The description information about the intent: "book an air ticket" in the data packet provided by the application and the text information corresponding to the speech input of the user are both input into the speech understanding system. If the speech input of the user includes the intent: "book an air ticket", output of the model may be "yes". If the speech input of the user does not include the intent: "book an air ticket", output of the model may be "no".

Alternatively, only one piece of slot information and text information corresponding to the speech input of the user are input into the speech understanding system each time, and the speech understanding system determines whether the speech input of the user includes a corresponding slot value. Recognizing whether the speech input of the user includes a slot value corresponding to "destination" is used as an example. The description information about the slot "destination" in the data packet provided by the application and the text information corresponding to the speech input of the user are both input into the speech understanding system. If the speech input of the user includes a slot value "Beijing" corresponding to "destination", output of the model may be "Beijing". If the speech input of the user does not include the slot value corresponding to "destination", output of the model may be "the corresponding slot value is not included".

If a computing capability allows, it is possible to run a plurality of semantic understanding models at the same time, to implement parallel recognition of a plurality of intents or slot values. When the intent and the one or more slot values in the speech input of the user are recognized, in an implementation, the intent in the speech input of the user may be preferably first recognized. The target application is determined based on the recognized intent, and then the one or more slot values in the speech input of the user is recognized based on the slot information in the data packet of the target application. Therefore, a process of recognizing slot information in a data packet of another application may be avoided, thereby omitting an unnecessary operation, saving an operation time, and improving efficiency of speech understanding.

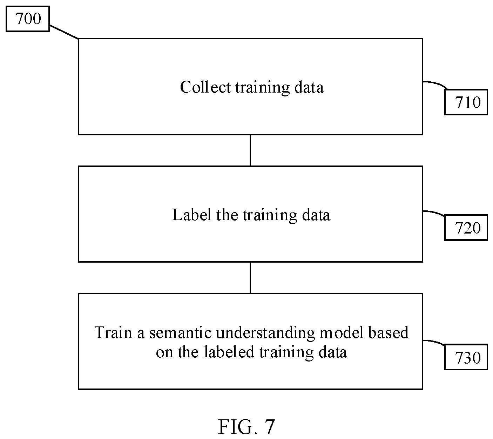

To implement the semantic understanding function, the semantic understanding model needs to be trained first. With reference to FIG. 7, in an embodiment, a training process of the semantic understanding model includes the following steps.

Step 710: Collect training data.

In an implementation, user instructions related to execution of a specific service of various applications may be widely collected. In an implementation, the user instructions may cover, to the greatest extent, various existing applications or future applications that may be interconnected with the speech understanding system, so that the speech understanding system can adapt to as many applications as possible. In another implementation, when the original user instructions do not include a specific user instruction, and consequently the speech understanding system cannot adapt to a specific service application or some service applications, a new related user instruction may be further collected, and the speech understanding system may be further trained and upgraded, to match an interface of the service application. A training text may further cover various expressions of each user instruction to the greatest extent, to improve a generalization capability of the semantic understanding model, so that the semantic understanding model can recognize a plurality of expressions of a user.

Step 720: Label the training data.

In an implementation, a large quantity of collected user instructions may be labeled, and intents and slot values in the user instructions are labeled. In addition, different descriptions may be used to describe the intents and slots corresponding to the slot values in the user instructions, to cope with different descriptions of intents and slots in data packets of different applications.

Step 730: Train the semantic understanding model based on the labeled training data.

In an implementation, for each user instruction, the description information of the intent and the user instruction are combined into training data, and the training data is used as input of the semantic understanding model. An intent output by the semantic understanding model and the labeled intent are used as input of a loss function to calculate a loss value for updating the model. For example, description of an intent: "book an air ticket" and a user instruction "book an air ticket from Shanghai to Beijing" labeled with the intent are both input into the semantic understanding model, and obtaining of a matching result is expected.

In another implementation, for each user instruction, the description information of the slot and the user instruction are combined into training data, and the training data is used as input of the semantic understanding model. A slot value output by the semantic understanding model and the labeled slot value are used as input of a loss function to calculate a loss value for updating the model. For example, description "flight destination" of a slot "destination" and a user instruction "book a high-speed railway ticket from Shanghai to Beijing" labeled with the one or more slot values are input into the model, and obtaining of a result "Beijing" is expected.

The trained semantic understanding model can accurately recognize an intent and one or more slot values in a user instruction that is the same as or similar to the training data. The trained semantic understanding model also has a strong generalization capability, and can recognize intents and slot values in different user instruction expressions. In addition, the trained semantic understanding model can also recognize a new intent or slot. For example, the training data of the current semantic understanding model does not include training data related to "book a high-speed railway ticket", but the training data includes a related user instruction and description information of an intent: "book an air ticket" similar to "book a high-speed railway ticket". In this case, the model has been trained with a capability of recognizing the intent: "book an air ticket" and the related one or more slot values from the user instruction. When a data packet of a newly accessed application includes intent information: "book an air ticket" and related slot information, there is a high probability that the model can successfully recognize the intent and the one or more related slot values from the user instruction, to adapt to a new application that is not included in the training data.

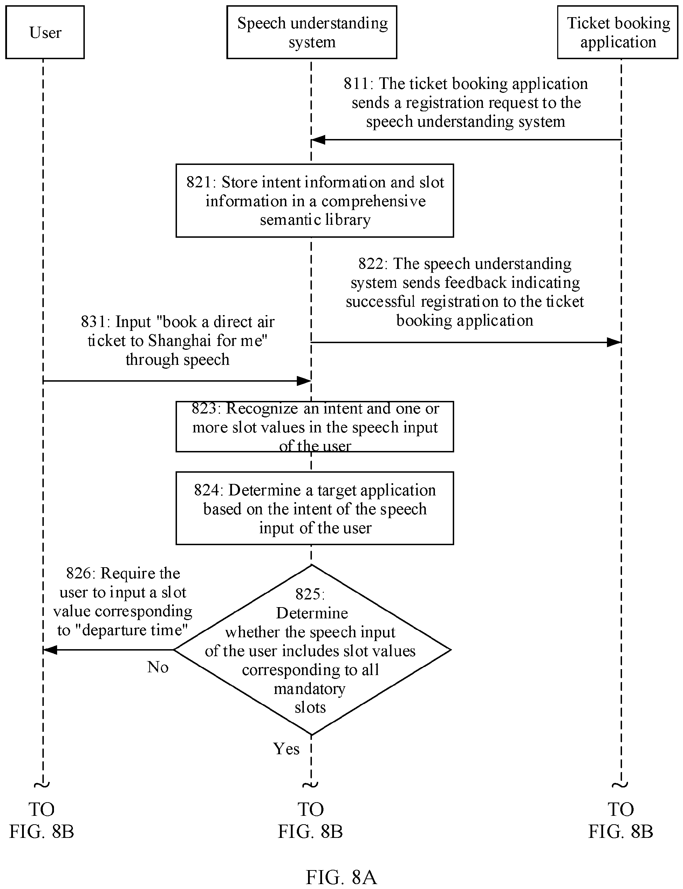

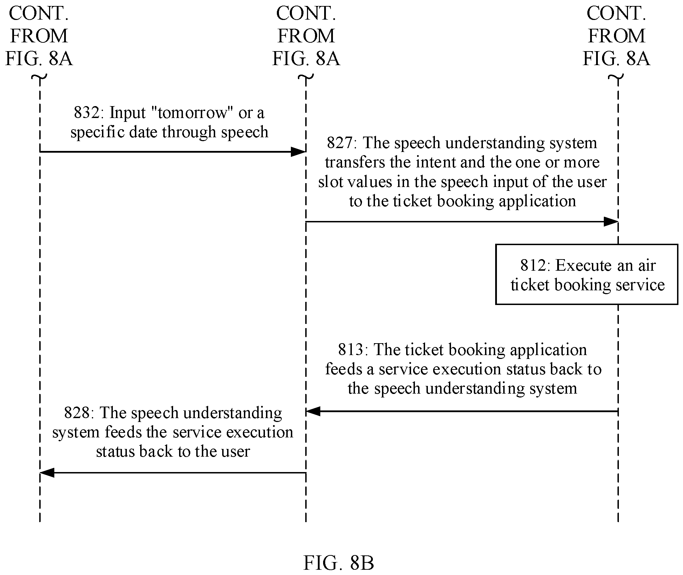

FIG. 8A and FIG. 8B show an example implementation of an example method according to an embodiment of the present invention. Herein, a target application is a ticket booking application, and an executed service is an air ticket booking service. With reference to FIG. 8A and FIG. 8B, after accessing the speech understanding system, the ticket booking application performs step 811 to send an interface registration request to the speech understanding system. The interface registration request includes an identifier of the ticket booking application, intent information corresponding to service execution, and slot information corresponding to one or more slot values needed in service execution. For example, in this example implementation, the intent information is "book an air ticket". In a data packet in a registration request sent by the ticket booking application, one intent corresponds to one slot package. To be specific, the slot package corresponding to the intent: "book an air ticket" includes mandatory slot information such as "destination" and "departure time", and optional slot information such as "cabin type" and "seat preference".

After receiving the registration request of the ticket booking application, the speech understanding system performs step 821 to store, in the comprehensive semantic library, the intent information and the slot information in the data packet in the registration request, and performs step 822 to give feedback to the ticket booking application and send a message indicating successful registration to the ticket booking application. So far, the ticket booking application completes an adaptation process with the speech understanding system.

When a user needs the ticket booking application to execute the air ticket booking service, the user performs step 831 to send a natural language instruction to the speech understanding- system. For example, in this example implementation, the instruction sent by the user is: "book a direct air ticket to Shanghai for me".

After obtaining speech input of the user, the speech understanding system performs step 823 to recognize an intent and one or more slot values in the speech input of the user based on the intent information and the slot information stored in the comprehensive semantic library. For example, in this example implementation, the speech understanding system recognizes that the speech input of the user includes an intent: "book an air ticket", a slot value "yes" corresponding to a selection-type slot "direct or not", and a slot value "Shanghai" corresponding to a fill-in slot "destination".

After the intent and the one or more slot values in the speech input of the user are recognized, step 824 is performed. The ticket booking application is determined as a target application based on the intent: "book an air ticket" with reference to indicators such as the one or more slot values, a use frequency of the user, and a score of the user.

After the target application is determined, step 825 is performed to determine, based on slot information in a slot package corresponding to the intent: "book an air ticket" in the data packet of the ticket booking application, whether the speech input of the user includes all slot values corresponding to mandatory slots, to be specific, whether slot values corresponding to "destination" and "departure time" are included. If the speech input of the user includes the slot values corresponding to "destination" and "departure time", step 827 is performed. For example, a slot value corresponding to "departure time" is missing from a user instruction "book a direct air ticket to Shanghai for me". In this case, step 826 is performed to require the user to newly input the slot value corresponding to "departure time".

After receiving the feedback from the speech understanding system, the user performs step 832 to input description about a date like "tomorrow" or "the day after tomorrow" through speech input, or directly input a specific date like "November 20, 2020" as a supplement to the missing slot value. In addition, the user can also newly input a complete instruction, for example, "book a direct air ticket to Shanghai for tomorrow for me" through speech.

After the intent and the slot values corresponding to all the mandatory slots in the speech input of the user are obtained, step 827 is performed. The speech understanding system transfers the intent and the slot values in the speech input of the user to ticket booking software. For example, in this example implementation, the speech understanding system sends an intent: "book an air ticket" and slot values "direct" and "Shanghai" to the ticket booking application.

After receiving the intent and the slot values that are sent by the speech understanding system, the ticket booking application performs step 812 to execute the air ticket booking service based on the received intent and slot values. After executing the corresponding service, the ticket booking application feeds back an execution status to the speech understanding system in step 813, and then the speech understanding system feeds back the execution status to the user in step 828. In this example implementation, if the air ticket is successfully booked, a result of the successful booking is fed back; or if the air ticket is not successfully booked, a reason for the booking failure is fed back.

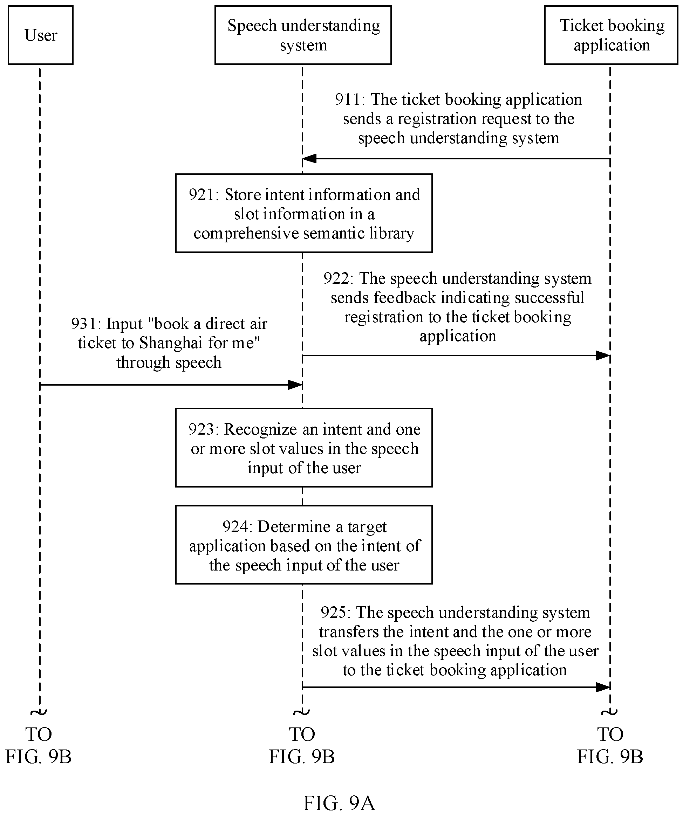

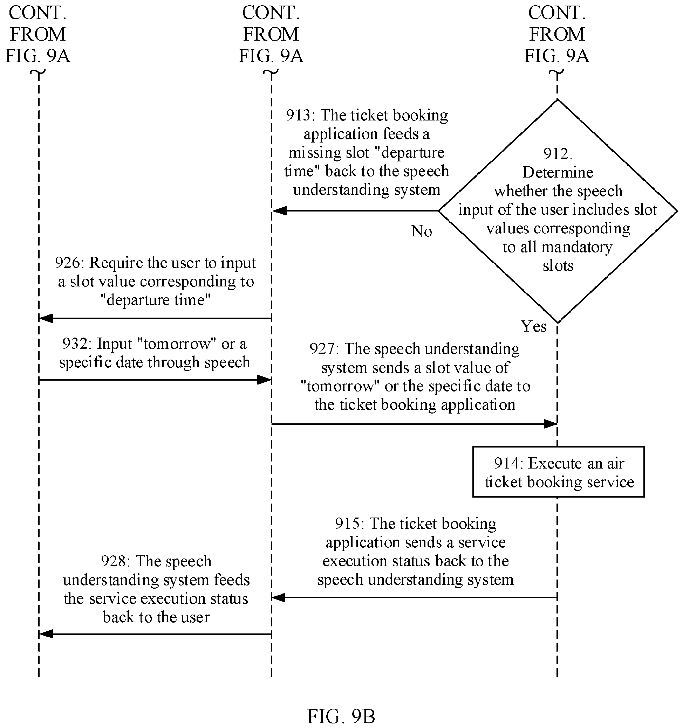

FIG. 9A and FIG. 9B show another example implementation of an example method according to an embodiment of the present invention. A target application is a ticket booking application, and an executed service is an air ticket booking service. Most content of this example implementation is the same as that in FIG. 8A and FIG. 8B. A difference lies in that there is no correspondence between an intent and a slot in a data packet in a registration request sent by the ticket booking application to a speech understanding system. Therefore, the speech understanding system cannot obtain, from the data packet, a mandatory slot needed in executing a service corresponding to an intent: "book an air ticket" by the ticket booking application.

After the target application is determined, step 925 is performed. The speech understanding system transfers an intent and one or more slot values in speech input of a user to the ticket booking application. In step 912, the ticket booking application determines whether the speech input of the user includes all slot values corresponding to mandatory slots, to be specific, whether slot values corresponding to "destination" and "departure time" are included. If the speech input of the user includes the slot values corresponding to "destination" and "departure time", step 914 is performed. For example, a slot value corresponding to "departure time" is missing from a user instruction "book a direct air ticket to Shanghai for me". In this case, step 913 is performed, and the slot "departure time" is fed back to the speech understanding system. The speech understanding system further interacts with the user in step 926 and step 932, requires the user to newly input the slot value corresponding to "departure time", and transfers the missing slot value to the ticket booking application. Subsequent steps are the same as those shown in FIG. 8A and FIG. 8B.

In the foregoing example implementation, only the ticket booking software is used as an example to show a working process of adaptation between the speech understanding system and an application and speech understanding of the speech input of the user. It should be understood that another commonly used application is also possible.

Based on the embodiments corresponding to FIG. 1 to FIG. 9A and FIG. 9B, to better implement the foregoing solutions in embodiments of this application, the following further provides related devices configured to implement the foregoing solutions.

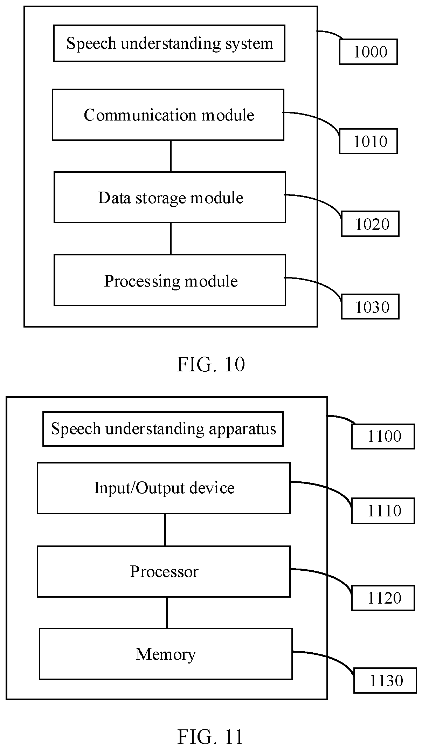

Based on the same technical concept as the foregoing embodiment, with reference to FIG. 10, in an embodiment of the present invention, a speech understanding system 1000 is provided. The speech understanding system includes the following modules.

A communication module 1010 is configured to obtain first speech input of a user, namely, implement content of step 110.

The communication module 1010 is further configured to receive a data packet in a registration request of an application.

A data storage module 1020 is configured to store the data packet of the application. The data packet comes from the registration request of the application. The data packet includes intent information and slot information of the application.

After receiving a registration request of a newly accessed application, the speech understanding system stores, in a comprehensive semantic library, the data packet in the registration request, for invocation during subsequent semantic recognition. Specifically, the comprehensive semantic library includes data packets of one or more applications. The applications may be in a one-to-one correspondence with the data packets. To be specific, one application corresponds to one data packet including intent information and slot information that are needed in executing a service by the application. The comprehensive semantic library is in a continuously updating state. During each time of access of a new application, a data packet corresponding to the newly accessed application is stored in the comprehensive semantic library, and the comprehensive semantic library is updated once, so that the comprehensive semantic library always includes data packets of all accessed applications.

A processing module 1030 is configured to: recognize an intent of the first speech input of the user based on the intent information in the comprehensive semantic library, and recognize one or more slot values in the first speech input of the user based on the slot information in the comprehensive semantic library, namely, implement content in step 120.

In an implementation, the step of recognizing the intent information in the first speech input based on the intent information in the comprehensive semantic library and recognizing the one or more slot values in the first speech input of the user based on the slot information in the comprehensive semantic library may be performed by a semantic understanding model. A specific implementation method is shown in FIG. 6. A working process of the semantic understanding model is described in detail in the foregoing embodiment. To avoid repetition, details are not described herein again.

The processing module 1030 is further configured to determine a target application of the first speech input based on the intent of the first speech input.

In an implementation, when only one application includes the intent recognized from the first speech input of the user, in this case, it may be directly determined that the application is the target application of the first speech input of the user. In another implementation, one speech understanding system may simultaneously access a plurality of applications that execute the same or a similar service function. In this case, a same intent may correspond to a plurality of target applications. For example, the intent: "book an air ticket" may correspond to a plurality of target applications such as Ctrip, Fliggy, and Meituan. In this case, in an implementation, the plurality of target applications may be sorted based on use frequencies of the user. In still another implementation, the plurality of target applications may be sorted based on scores of the user. In yet another implementation, the plurality of target applications may be further sorted by comprehensively considering the use frequencies of the user and the scores of the user. It should be understood that another possible manner of sorting the target applications is also possible. After the plurality of target applications are sorted, the target application that ranks first may be selected as a target application corresponding to a first speech instruction of the user. The intent and the one or more slot values in the speech input of the user are sent to the target application, and the target application executes a corresponding service. In addition, when the target application is determined, the one or more slot values included in the speech input of the user may be considered, and the target application is determined based on a comprehensive consideration of the intent and the one or more slot values in the speech input of the user.

In an implementation, if the intent information in the speech input of the user is not correctly recognized, feedback indicating a failure of the speech understanding is output. The feedback may be performed in any possible manner. For example, a warning indicating a failure of the speech understanding may be sent in a screen display manner or a speech broadcast manner, or the user may be required to perform speech input again in a screen display manner or a speech broadcast manner. It should be understood that another feedback manner in which the user can learn of a speech recognition failure is also possible.

The communication module 1010 is further configured to transfer the intent and the one or more slot values in the first speech input to the target application.

There may be different transfer manners based on different deployment manners of the speech understanding system and an application. In an implementation, the speech understanding system and a service application may share one central processing unit (CPU). For example, both the speech understanding system and a matching application are on one smart terminal (for example, the Siri speech assistant). In this case, the intent and the one or more slot values may be transferred through program invoking. In another implementation, the speech understanding system may be deployed on a cloud, and the application may be deployed on a terminal. In this case, the intent and the one or more slot values may be transferred through network communication. In still another implementation, functions of the speech understanding system and the service application may be respectively executed by different processors. For example, the speech understanding system may be an independent control apparatus, and is configured to control another peripheral apparatus (for example, the Xiaodu artificial intelligence assistant). In this case, the intent and the one or more slot values may be transferred through network communication. It should be understood that another deployment manner of the speech understanding system and the application is also possible. Correspondingly, yet another implementation in which the intent and the one or more slot values in the speech instruction of the user can be transferred to the corresponding target application is also possible.

In another embodiment of the present invention, the communication module 1010 is further configured to:
perform step 150 to require the user to input a missing slot value;
perform step 160 to obtain second speech input;
perform step 190 to feed back, to the user, an execution result of executing the corresponding service by the target application;
perform step 170 to transfer one or more slot values in the second speech input to the target application; and
perform step 180 to receive feedback of executing a corresponding service by the target application.

Specific implementations of step 150 to step 190 have been described in detail in the method embodiment. To avoid repetition, details are not described herein again.

In an implementation, the speech understanding system and a service application may share one central processing unit (CPU). For example, the speech understanding system and a matching application are installed on a smart terminal (for example, the Siri speech assistant). Functions of various applications on the smart terminal device may be controlled through the speech understanding system, for example, play music, answer a call, and check the weather. The smart terminal herein may be a desktop computer, a television, a tablet computer, a laptop computer, a smartphone, an e-reader, a smart watch, smart glasses, or the like. In another implementation, the speech understanding system may be deployed on a cloud. The speech understanding system on the cloud may help one or more terminal-side devices perform a speech understanding function. When the speech understanding system is deployed on the cloud, the speech understanding system on the cloud mainly performs a speech understanding function, while the terminal-side device is mainly configured to: interact with the target application and interact with the user. The terminal-side device sends, to the cloud-side device, the intent information and the slot information that are received from the registered application. The cloud-side device stores the intent information and the slot information that are received from the one or more terminal-side devices. When receiving speech information, the terminal-side device may send the speech information to the terminal-side device. The terminal-side device recognizes an intent of the speech information and one or more slot values in the speech information based on the stored intent information and slot information, and sends the recognized intent and one or more recognized slot values to the terminal-side device. The terminal-side device interacts with the target application to perform a subsequent operation. When a part of slot information is missing from the speech information, the terminal-side device requests the user to input the missing slot information, and sends, to the cloud-side device for speech understanding, speech information newly input by the user. In still another implementation, the speech understanding system may be an independent control apparatus, and is configured to control another peripheral device (for example, the Xiaodu artificial intelligence assistant). A function of the peripheral device may be controlled through a speech understanding apparatus. For example, the speech understanding apparatus may be located indoors to control various indoor household appliances; or the speech understanding system may be located inside a vehicle to control various hardware systems in a cockpit. It should be understood that another possible implementation of the speech understanding system is also possible.

Based on the same technical concept as the foregoing embodiment, with reference to FIG. 11, in an embodiment of the present invention, a semantic understanding apparatus 1100 is provided. The semantic understanding apparatus includes the following modules.

An input/output device 1110 is configured to receive first speech input of a user.

In an implementation, the input/output device 1110 may include a speech input device like a microphone, and is configured to receive the first speech input of the user to implement content of step 110.

A processor 1120 is configured to receive a data packet in a registration request of an application.

A memory 1130 is configured to store the data packet of the application. The data packet comes from the registration request of the application. The data packet includes intent information and slot information of the application.

After receiving a registration request of a newly accessed application, the speech understanding system stores, in a comprehensive semantic library, the data packet in the registration request, for invocation during subsequent semantic recognition. Specifically, the comprehensive semantic library includes data packets of one or more applications. The applications may be in a one-to-one correspondence with the data packets. To be specific, one application corresponds to one data packet including intent information and slot information that are needed in executing a service by the application. The comprehensive semantic library is in a continuously updating state. During each time of access of a new application, a data packet corresponding to the newly accessed application is stored in the comprehensive semantic library, and the comprehensive semantic library is updated once, so that the comprehensive semantic library always includes data packets of all accessed applications.

The processor 1120 is further configured to: recognize an intent of the first speech input of the user based on the intent information in the comprehensive semantic library, and recognize one or more slot values in the first speech input of the user based on the slot information in the comprehensive semantic library. A specific implementation method is shown in FIG. 6. A working process of a semantic understanding model is described in detail in the foregoing embodiment. To avoid repetition, details are not described herein again.

In an implementation, the step of recognizing the intent information of the first speech input of the user based on the intent information in the comprehensive semantic library and recognizing the one or more slot values in the first speech input of the user based on the slot information in the comprehensive semantic library may be performed by the semantic understanding model.

The processor 1120 is further configured to determine a target application of the first speech input of the user based on the intent of the first speech input of the user.

In an implementation, when only one application includes the intent recognized from the first speech input of the user, in this case, it may be directly determined that the application is the target application of the first speech input of the user. In another implementation, one speech understanding system may simultaneously access a plurality of applications that execute the same or a similar service function. In this case, a same intent may correspond to a plurality of target applications. For example, the intent: "book an air ticket" may correspond to a plurality of target applications such as Ctrip, Fliggy, and Meituan. In this case, in an implementation, the plurality of target applications may be sorted based on use frequencies of the user. In still another implementation, the plurality of target applications may be sorted based on scores of the user. In yet another implementation, the plurality of target applications may be further sorted by comprehensively considering the use frequencies of the user and the scores of the user. It should be understood that another possible manner of sorting the target applications is also possible. After the plurality of target applications are sorted, the target application that ranks first may be selected as a target application corresponding to a first speech instruction of the user. The intent and the one or more slot values in the speech input of the user are sent to the target application, and the target application executes a corresponding service. In addition, when the target application is determined, the one or more slot values included in the speech input of the user may be considered, and the target application is determined based on a comprehensive consideration of the intent and the one or more slot values in the speech input of the user.

In an implementation, if the intent information in the speech input of the user is not correctly recognized, feedback indicating a failure of the speech understanding is output. The feedback may be performed in any possible manner. For example, a warning indicating a failure of the speech understanding may be sent in a screen display manner or a speech broadcast manner, or the user may be required to perform speech input again in a screen display manner or a speech broadcast manner. It should be understood that another feedback manner in which the user can learn of a speech recognition failure is also possible.

The processor 1120 is further configured to send the intent and the one or more slot values in the first speech input of the user to the corresponding target application.

In another embodiment of the present invention, the input/output device 1110 is further configured to:
perform step 160 to obtain second speech input;
perform step 150 to require the user to input a missing slot value; and
perform step 190 to feed back, to the user, an execution result of executing the corresponding service by the target application.

In an implementation, a man-machine interaction interface that performs step 160 and step 190 may include a speech output device like a loudspeaker. The speech understanding system first generates a text instruction, then converts the text instruction into speech by using a text-to-speech (TTS) system, and broadcasts the speech to the user.

The processor 1120 is further configured to:
perform step 180 to receive feedback of executing a corresponding service by the target application; and
perform step 170 to transfer one or more slot values in the second speech input to the target application.

Specific implementations of step 150 to step 190 have been described in detail in the method embodiment. To avoid repetition, details are not described herein again.

In an implementation, the speech understanding apparatus may be an independent control apparatus, and is configured to control another peripheral device (for example, the Xiaodu artificial intelligence assistant). A function of the peripheral device may be controlled through the speech understanding apparatus. For example, the speech understanding apparatus may be located indoors to control various indoor household appliances; or the speech understanding system may be located inside a vehicle to control various hardware systems in a cockpit. It should be understood that another possible implementation of the speech understanding system is also possible.

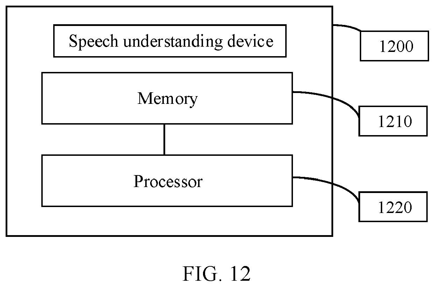

Based on the same technical concept as the foregoing embodiment, with reference to FIG. 12, in an embodiment of the present invention, a speech understanding device 1200 is provided. Specifically, the speech understanding device 1200 includes: a memory 1210 and a processor 1220 (there may be one or more processors 1220 in the speech understanding device 1200, and an example of one processor is used in FIG. 12). The memory 1210 may include a read-only memory and a random access memory, and provide instructions and data to the processor 1220.

A part of the memory 1210 may further include a non-volatile random access memory (non-volatile random access memory, NVRAM). The memory 1210 stores a processor and operation instructions, an executable module or a data structure, a subset thereof, or an extended set thereof. The operation instructions may include various operation instructions to implement various operations.

The method disclosed in the foregoing embodiment of this application may be applied to the processor 1220, or may be implemented by the processor 1220. The processor 1220 may be an integrated circuit chip and has a signal processing capability. In an implementation process, the steps in the foregoing method may be implemented by using a hardware integrated logic circuit in the processor 1220, or by using instructions in a form of software. The foregoing processor 1220 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1320 may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed and accomplished by a hardware decoding processor, or may be performed and accomplished by a combination of hardware and a software module in the decoding processor. The software module may be located in a mature storage medium in the art, like a random access memory, a flash memory, a read-only memory, a programmable read-only memory, an electrically erasable programmable memory, or a register. The storage medium is located in the memory 1210, and the processor 1220 reads information in the memory 1210 and accomplishes the steps in the foregoing methods in combination with hardware of the processor 1220.

An embodiment of the present invention further provides a computer-readable storage medium. Based on the description of the foregoing implementations, a person skilled in the art may clearly understand that this application may be implemented by software in addition to necessary universal hardware, or certainly may be implemented by dedicated hardware, including an application-specific integrated circuit, a dedicated CLU, a dedicated memory, a dedicated component, and the like. Generally, any function implemented by a computer program may be easily implemented by using corresponding hardware. In addition, specific hardware structures used to implement the same function may be various, for example, an analog circuit, a digital circuit, or a dedicated circuit. However, in this application, a software program implementation is a better implementation in most cases. Based on such an understanding, the technical solutions of this application essentially or the part contributing to the conventional technologies may be implemented in a form of a software product. The computer software product is stored in a readable storage medium, like a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application. When computer program instructions that are in the storage medium and that correspond to a code scanning method are read or executed by an electronic device, the steps and the processes described in the method embodiments shown in FIG. 1 to FIG. 7 may be implemented. Details are not described herein again.

The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

In the several embodiments provided in this application, it may be understood that the disclosed method, apparatus, device, computer storage medium, and computer program product may be implemented in other manners. For example, the described apparatus embodiment is merely an example. Division into the modules is merely logical function division and may be other division in actual implementation. For example, a plurality of modules may be combined or integrated into another system, or some features may be ignored or not performed. In an implementation, the apparatus is stored in a memory in a form of an executable program module and is invoked and executed by a processor, so that the processor controls modules in the semantic understanding apparatus to perform corresponding operations, to implement an interface matching operation between the speech understanding system and a new service application.

It may be understood that sequential adjustment, combination, and deletion may be performed on the steps of the method in embodiments of the present invention according to an actual requirement. Correspondingly, the modules in the apparatus in embodiments of the present invention may be combined, divided, and deleted according to an actual requirement.

What is disclosed above are merelyembodiments of the present invention, and certainly is not intended to limit the protection scope of the present invention. A person of ordinary skill in the art may understand that all or some of processes for implementing the foregoing embodiments and equivalent modifications made in accordance with the claims of the present invention shall fall within the scope of the present invention.

## Claims

1. A speech understanding method, comprising:
obtaining first speech information;
matching an intent for the first speech information based on intent information in a comprehensive semantic library;
determining a target application based on the intent of the first speech information;
recognizing one or more slot values in the first speech information based on slot information in the comprehensive semantic library, wherein
the intent information and the slot information in the comprehensive semantic library come from a plurality of registered applications; and
transferring the intent of the first speech information and the one or more slot values in the first speech information to the target application.

2. The method according to claim 1, wherein the method further comprises:
displaying a first interface of the target application based on the intent of the first speech information and the one or more slot values in the first speech information.

3. The method according to claim 1 or 2, wherein after the transferring the intent of the first speech information and the one or more slot values in the first speech information to the target application, the method further comprises:
outputting a result of performing a target operation by the target application, wherein the target operation is an operation determined based on the intent of the first speech information and the one or more slot values in the first speech information.

4. The method according to any one of claims 1 to 3, wherein the determining a target application based on the intent of the first speech information is specifically:
determining a plurality of candidate applications based on the intent of the first speech information; and
determining the target application based on respective use frequencies or scores of a user for the plurality of candidate applications.

5. The method according to any one of claims 1 to 4, wherein the method further comprises:
receiving feedback information of the target application, wherein the feedback information comprises slot information missing from the first speech information; and
requesting the user to input the slot information missing from the first speech information.

6. The method according to any one of claims 1 to 5, wherein
one piece of intent information in the comprehensive semantic library corresponds to at least one slot package, and the slot package comprises one or more pieces of slot information; and
the recognizing one or more slot values in the first speech information based on slot information in the comprehensive semantic library is specifically:
recognizing the one or more slot values in the first speech input based on the slot information in a slot package corresponding to the intent of the first speech information.

7. The method according to claim 6, wherein that one piece of intent information in the comprehensive semantic library corresponds to at least one slot package, and the slot package comprises one or more pieces of slot information is specifically:
the slot package comprises one or more pieces of mandatory slot information, and the mandatory slot information is slot information required for executing an intent corresponding to the intent information; and
when a quantity of slot values recognized from the first speech information is less than a quantity of pieces of mandatory slot information in a target slot package, requesting the user to input the slot information missing from the first speech information, wherein the target slot package is a slot package corresponding to the intent of the first speech information.

8. The method according to claim 5 or 7, wherein after the requesting the user to input the slot information missing from the first speech information, the method further comprises:
obtaining second speech information in response to the request;
recognizing one or more slot values in the second speech information based on the missing slot information; and
transferring the one or more slot values in the second speech information to the target application.

9. A speech understanding device, comprising:
a communication module, configured to receive first speech information;
a data storage module, configured to store intent information and slot information, wherein the intent information and the slot information come from a plurality of registered applications; and
a processing module, configured to: match an intent for the first speech information based on the intent information in the data storage module, determine a target application based on the intent of the first speech information, and recognize one or more slot values in the first speech input based on the slot information in the data storage module, wherein
the communication module is further configured to send the intent of the first speech information and the one or more slot values in the first speech information.

10. The speech understanding device according to claim 9, wherein that the processing module determines the target application based on the intent of the first speech information is specifically that
the processing module determines a plurality of candidate applications based on the intent of the first speech information, and determines the target application based on respective use frequencies or scores of a user for the plurality of candidate applications.

11. The speech understanding device according to claim 9 or 10, wherein
one piece of intent information corresponds to at least one slot package, and the slot package comprises at least one or more pieces of slot information; and
the recognizing one or more slot values in the first speech input based on the slot information is specifically:
recognizing the one or more slot values in the first speech input based on the slot information in a slot package corresponding to the intent of the first speech information.

12. The speech understanding device according to claim 11, wherein that one piece of intent information corresponds to at least one slot package, and the slot package comprises at least one or more pieces of slot information is specifically that
the slot package comprises one or more pieces of mandatory slot information, and the mandatory slot information is slot information required for executing an intent corresponding to the intent information; and
when a quantity of slot values recognized from the first speech information is less than a quantity of pieces of mandatory slot information in a target slot package, the communication module is further configured to send slot information missing from the first speech information, wherein the target slot package is a slot package corresponding to the intent of the first speech information.

13. The speech understanding device according to claim 12, wherein after the communication module sends the slot information missing from the first speech information to a second device, the communication module is further configured to obtain second speech information;
the processing module is further configured to recognize one or more slot values in the second speech information based on the missing slot information; and
the communication module is further configured to send the one or more slot values in the second speech information.

14. A speech understanding apparatus, comprising:
a microphone, configured to collect first speech information;
a memory, configured to store intent information and slot information, wherein the intent information and the slot information come from a plurality of registered applications; and
a processor, configured to: match an intent for the first speech information based on the intent information, determine a target application based on the intent of the first speech information, and recognize one or more slot values in the first speech information based on the slot information, wherein
the processor is further configured to transfer the intent of the first speech information and the one or more slot values in the first speech information to the target application.

15. The speech understanding apparatus according to claim 14, wherein the speech understanding apparatus further comprises a display; and
the processor is configured to instruct, based on the intent of the first speech information and the one or more slot values in the first speech information, the display to display a first interface of the target application.

16. The speech understanding apparatus according to claim 14 or 15, wherein the speech understanding apparatus further comprises an output apparatus, configured to: after the processor transfers the intent of the first speech information and the one or more slot values in the first speech information to the target application, output, based on an instruction of the processor, a result of performing a target operation by the target application, wherein the target operation is an operation determined based on the intent of the first speech information and the one or more slot values in the first speech information.

17. The speech understanding apparatus according to any one of claims 14 to 16, wherein that the processor determines a target application based on the intent of the first speech information is specifically that
the processor determines a plurality of candidate applications based on the intent of the first speech information; and
the processor determines the target application based on respective use frequencies or scores of a user for the plurality of candidate applications.

18. The speech understanding apparatus according to any one of claims 14, 15, and 17, wherein
the processor is further configured to receive feedback information of the target application, wherein the feedback information comprises slot information missing from the first speech information; and
the speech understanding apparatus further comprises an output apparatus, configured to output a first request, wherein the first request is used to request the user to input the slot information missing from the first speech information.

19. The speech understanding apparatus according to any one of claims 14 to 18, wherein
one piece of intent information corresponds to at least one slot package, and the slot package comprises one or more pieces of slot information; and
the recognizing one or more slot values in the first speech information based on the slot information is specifically:
recognizing the one or more slot values in the first speech input based on the slot information in a slot package corresponding to the intent of the first speech information.

20. The speech understanding apparatus according to claim 19, wherein that one piece of intent information corresponds to at least one slot package, and the slot package comprises one or more pieces of slot information is specifically that
the slot package comprises one or more pieces of mandatory slot information, and the mandatory slot information is slot information required for executing an intent corresponding to the intent information; and
the speech understanding apparatus further comprises an output apparatus, and when a quantity of slot values recognized from the first speech information is less than a quantity of pieces of mandatory slot information in a target slot package, the output apparatus is configured to request the user to input the slot information missing from the first speech information, wherein the target slot package is a slot package corresponding to the intent of the first speech information.

21. The speech understanding apparatus according to claim 18 or 20, wherein
after the requesting the user to input the slot information missing from the first speech information, the microphone is further configured to collect second speech information;
the processor is further configured to recognize one or more slot values in the second speech information based on the missing slot information; and
the processor is further configured to transfer the one or more slot values in the second speech information to the target application.

22. A computer storage medium, comprising computer instructions, wherein when the computer instructions are run on a computer, the computer is enabled to perform the method according to any one of claims 1 to 8.

23. A computer program product, wherein when the computer program product is run on a computer, the computer is enabled to perform the method according to any one of claims 1 to 8.
